# EUROPEAN PATENT APPLICATION

(11) **EP 4 745 090 A1**
(43) Date of publication of application: **20.05.2026**
(21) Application number: 25210098.7
(22) Date of filing: 21.10.2025
(51) Int. Cl.: C01G 53/42, C01G 53/50, C01G 53/506, H01M 4/525

(54) **POSITIVE ELECTRODE ACTIVE MATERIAL AND LITHIUM SECONDARY BATTERY COMPRISING THE SAME**

(30) Priority: 29.10.2024 KR 20240149760
(71) Applicant: ECOPRO BM CO., LTD., Cheongju-si, Chungcheongbuk-do 28116 (KR)
(72) Inventor: JO, Min Su, 28116 Cheongju-si, Chungcheongbuk-do (KR); KWAK, Hwan Wook, 28116 Cheongju-si, Chungcheongbuk-do (KR); KONG, Bo Hyun, 28116 Cheongju-si, Chungcheongbuk-do (KR); CHOI, Moon Ho, 28116 Cheongju-si, Chungcheongbuk-do (KR); BAE, Jin Ho, 28116 Cheongju-si, Chungcheongbuk-do (KR); NAM, Yu Jin, 28116 Cheongju-si, Chungcheongbuk-do (KR); LEE, Jae Kyun, 28116 Cheongju-si, Chungcheongbuk-do (KR); SEON, Young Hoe, 28116 Cheongju-si, Chungcheongbuk-do (KR)
(74) Representative: BCKIP Part mbB

(57) **Abstract**

The present invention relates to a positive electrode active material and a lithium secondary battery comprising the same, and more particularly, to a positive electrode active material, in which, instead of coating the surface of a unit particle constituting a lithium transition metal oxide, a cobalt-enriched region in which the distribution of cobalt is concentrated is formed in a surface portion of the unit particle, thereby reducing conductivity variation between unit particles caused by the formation of a non-uniform coating layer and improving electrochemical properties, including capacity characteristic and rate characteristic, and to a lithium secondary battery comprising the same.

## Description

### BACKGROUND

### 1. Field of the Invention

The present invention relates to a positive electrode active material and a lithium secondary battery comprising the same, and more particularly, to a positive electrode active material, in which, instead of coating the surface of a unit particle constituting a lithium transition metal oxide, a cobalt-enriched region in which the distribution of cobalt is concentrated is formed in a surface portion of the unit particle, thereby reducing conductivity variation between unit particles caused by the formation of a non-uniform coating layer and improving electrochemical properties, including capacity characteristic and rate characteristic, and to a lithium secondary battery comprising the same.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

A lithium transition metal oxide is used as a positive electrode active material for a lithium secondary battery, and as an example, composite oxides such as LiCoO₂, LiMn₂O₄, LiNiO₂, LiMnO₂, and the like are being studied.

Among the positive electrode active materials, LiCoO₂ is the most widely used due to its excellent lifetime characteristics and charge/discharge efficiency, but it has limitations in price competitiveness because cobalt, which is used as a raw material, is expensive due to resource constraints.

Lithium manganese oxides such as LiMnO₂ and LiMn₂O₄ have advantages of excellent thermal safety and low price, but also have problems of low capacity and poor high-temperature characteristics. In addition, a LiNiO₂-based positive electrode active material exhibits battery characteristics such as high discharge capacity, but it is difficult to synthesize the LiNiO₂-based positive electrode active material due to cation mixing between Li and transition metals, thereby causing significant problems in rate characteristics.

Therefore, in order to improve the low rate and cycle characteristics of LiNiO₂ while maintaining its high reversible capacity, ternary lithium transition metal oxides such as the so-called NCM (Ni-Co-Mn) and NCA (Ni-Co-Al), in which part of the nickel is substituted with cobalt, manganese, and/or aluminum, or quaternary lithium transition metal oxides such as NCMA (Ni-Co-Mn-Al) have been developed. Since the reversible capacity is reduced as the nickel content in the ternary or quaternary lithium transition metal oxide decreases, research has been widely conducted to increase the nickel content in the lithium transition metal oxide.

However, as the content of nickel in the lithium transition metal oxide increases, cation mixing increases in the crystal structure, thereby reducing stability or increasing the content of unreacted lithium impurities such as LiOH and Li₂CO₃ on the surface.

As the content of lithium impurities remaining on the surface of the lithium transition metal oxide increases, gas generation and swelling may be promoted in a lithium secondary battery using the lithium transition metal oxide as a positive electrode active material. As the content of lithium impurities remaining on the surface of the lithium transition metal oxide increases, a paste composition becomes gel-like due to lithium impurities when a paste for forming a positive electrode active material layer is prepared using the lithium transition metal oxide.

Accordingly, there are various attempts to reduce a content of lithium impurity remaining on a surface of the lithium transition metal oxide through surface coating of the lithium transition metal oxide and to reduce side reactions between the surface of the lithium transition metal oxide and an electrolyte.

In addition, when a conductive coating layer is formed on the surface of the lithium transition metal oxide, as compared with a case where a non-conductive coating layer is formed on the surface of the lithium transition metal oxide, the conductive coating layer can contribute to improving rate capability by enhancing ion or electron transportability mediated by the lithium transition metal oxide.

However, unlike the non-conductive coating layer, the conductive coating layer causes significant changes in electrochemical properties depending on continuity and/or thickness of the coating layer.

Therefore, if a non-uniform coating layer is formed on the surface of the lithium transition metal oxide, or if a coating material is present on the surface of the lithium transition metal oxide in a particulate form, it may be difficult to exhibit stable electrochemical properties over a long period due to conductivity variation between particles.

### SUMMARY OF THE INVENTION

In the lithium secondary battery market, while growth of lithium secondary batteries for electric vehicles is driving the market, demand for a positive electrode material used in the lithium secondary battery is also continuously changing.

For example, in the past, lithium secondary batteries using lithium iron phosphate (LFP) have mainly been used from the viewpoint of ensuring safety, but recently, use of nickel-based lithium transition metal oxide having a higher energy capacity per weight compared to LFP has been increasing.

Accordingly, a positive electrode active material used in a higher-specification lithium secondary battery needs to appropriately satisfy both expected stability and reliability even under more severe operating conditions.

Conventionally, in order to alleviate problems caused by an increase in the nickel content in the lithium transition metal oxide, a non-conductive coating layer or a conductive coating layer has been formed on a surface of the lithium transition metal oxide. However, in view of electrochemical properties, lithium transition metal oxide with a conductive coating layer formed thereon tends to be preferred over lithium transition metal oxide with a non-conductive coating layer formed thereon.

However, as described above, since the conductive coating layer causes significant variation in electrochemical properties depending on continuity and/or thickness of the coating layer, in many cases, when a non-uniform coating layer is formed on the surface of the lithium transition metal oxide, or a coating material is present on the surface of the lithium transition metal oxide in a particulate form, it is difficult to maintain stable electrochemical properties for a long period due to conductivity variation between particles. Herein, excellent continuity of the conductive coating layer means that the conductive coating layer covers the entire surface of the lithium transition metal oxide.

For example, in order to improve the continuity of the conductive coating layer and reduce variation of the conductive coating layer between particles, it is necessary to increase a content of a coating raw material introduced in a coating process on the lithium transition metal oxide.

However, when the content of the coating raw material introduced in the coating process on the lithium transition metal oxide is increased, variation of the conductive coating layer between particles may instead increase, or the conductive coating layer may become excessively thick overall. When the conductive coating layer becomes excessively thick, ion or electron transportability mediated by the lithium transition metal oxide may be degraded.

Accordingly, an object of the present invention is to provide a positive electrode active material in which, instead of coating a surface of a unit particle constituting the lithium transition metal oxide, a cobalt-enriched region in which cobalt distribution is concentrated is formed in a surface portion of the unit particle, thereby reducing conductivity variation between unit particles caused by formation of a non-uniform coating layer and improving electrochemical properties including capacity characteristic and rate characteristic.

Another object of the present invention is to provide a positive electrode active material capable of preventing surface deterioration caused by cracks generated on the surface of the unit particle by improving resistance to volume change of the unit particle caused by repeated charging/discharging, through forming the cobalt-enriched region, in which cobalt distribution is concentrated, in the surface portion of the unit particle at a predetermined thickness.

A further object of the present invention is to provide a positive electrode comprising the positive electrode active material defined herein.

In addition, another object of the present invention is to provide a lithium secondary battery using the positive electrode defined herein.

The objects of the present invention are not limited to those mentioned above (for example, for electric vehicles), and other objects and advantages of the present invention that are not described can be understood from the following description and will be more clearly understood by the embodiments of the present invention. It will also be readily apparent that the objects and advantages of the present invention can be realized by means and combinations thereof as defined in the claims.

According to one aspect of the present invention, there is provided a positive electrode active material comprising a lithium transition metal oxide containing lithium, nickel, and cobalt, wherein the lithium transition metal oxide is in a form of a secondary particle in which a plurality of unit particles are aggregated, and a cobalt-enriched region in which distribution of cobalt is concentrated is present in a surface portion of at least one of the unit particles.

The lithium transition metal oxide is characterized in that, instead of forming a cobalt-containing coating layer on a surface of the unit particle, the cobalt-enriched region in which distribution of cobalt is concentrated is formed in the surface portion of the unit particle.

The cobalt-enriched region is distinguished from a cobalt-containing coating layer formed on a surface of the unit particle and/or the secondary particle. The cobalt-containing coating layer covers an outermost surface of the unit particle, while the cobalt-enriched region is a region present inside the outermost surface of the unit particle.

Accordingly, cobalt-containing oxide having crystallographic characteristics different from those of the lithium transition metal oxide is absent on a surface of the secondary particle. In addition, cobalt-containing oxide having crystallographic characteristics different from those of the lithium transition metal oxide is absent in a grain boundary formed by a gap between adjacent unit particles and/or contact of adjacent unit particles.

A thickness of the cobalt-enriched region is preferably 1 nm to 100 nm, 1 nm to 90 nm, 1 nm to 80 nm, 1 nm to 70 nm, or 1 nm to 60 nm.

The lithium transition metal oxide may be represented by Chemical Formula 1 below.

[Chemical Formula 1] Li_{w}Ni_{1-(x+y+z)}CoₓMn_{y}M1_{z}O₂

wherein, in Chemical Formula 1, Ml is at least one selected from Na, K, Mg, Ba, B, Ce, Hf, Ta, Cr, F, Al, V, Ti, Fe, Zr, Zn, Si, Y, Nb, Ga, Sn, Mo, P, Sr, Ge, Nd, Gd, and Cu, and 0.95 ≤ w ≤ 1.15, 0 < x ≤ 0.20, 0 ≤ y ≤ 0.20, and 0 < z ≤ 0.20.

In a diffraction spectrum obtained through X-ray diffraction (XRD) analysis using a Cu-Kα ray with respect to the positive electrode active material, a ratio (I2/I1) of an average intensity (I2) of a peak present in a region of 2θ = 45.25 + 0.25° to a maximum intensity (I1) of a peak present in a region of 2θ = 44.5 ± 0.5° may be greater than 0.001 and less than 0.015.

In another aspect of the present invention, there is provided a positive electrode comprising the above-described positive electrode active material.

In still another aspect of the present invention, there is provided a lithium secondary battery comprising the above-described positive electrode.

### BRIEF DESCRIPTION OF THE DRAWINGS

FIG. 1 is a TEM/EDS image of a lithium transition metal oxide according to Example 1.
FIG. 2 is a TEM/EDS image of a lithium transition metal oxide according to Example 2.
FIG. 3 is a TEM/EDS image of a lithium transition metal oxide according to Example 3.
FIG. 4 is a TEM/EDS image of a lithium transition metal oxide according to Comparative Example 1.
FIG. 5 is a TEM/EDS image of a lithium transition metal oxide according to Comparative Example 2.
FIG. 6 is a TEM/EDS image of a lithium transition metal oxide according to Comparative Example 3.
FIG. 7 is a TEM/EDS image of a lithium transition metal oxide according to Comparative Example 4.
FIG. 8 is a TEM/EDS image of a lithium transition metal oxide according to Comparative Example 5.
FIG. 9 is a TEM/EDS image of a lithium transition metal oxide according to Comparative Example 6.

### DETAILED DESCRIPTION OF EXEMPLARY EMBODIMENTS

To better understand the present invention, certain terms are defined herein for convenience. Unless otherwise defined herein, scientific and technical terms used herein will have meanings generally understood by those of ordinary skill in the art. In addition, unless the context clearly indicates otherwise, it should be understood that a term in the singular form also includes its plural form, and a term in the plural form also includes its singular form.

### Positive electrode active material

A positive electrode active material according to one aspect of the present invention comprises a lithium transition metal oxide containing lithium, nickel, and cobalt.

The lithium transition metal oxide is a composite metal oxide capable of intercalation/deintercalation of lithium ions and has a layered crystal structure belonging to the R-3m space group. The lithium transition metal oxide having the layered crystal structure exhibits a characteristic peak in a region of 20 of 18° to 20° (for example, a region of 20 = 18.6 ± 1°) in a diffraction pattern obtained from XRD analysis.

Preferably, in order to improve low rate characteristic and lifespan characteristic while maintaining high reversible capacity of LiNiO₂, the lithium transition metal oxide may be a ternary-type lithium transition metal oxide such as NCM (Ni-Co-Mn) or NCA (Ni-Co-Al), which additionally contains manganese and/or aluminum, or a quaternary-type lithium transition metal oxide such as NCMA (Ni-Co-Mn-Al).

Preferably, the lithium transition metal oxide may have a composition represented by Chemical Formula 1 below.

[Chemical Formula 1] Li_{w}Ni_{1-(x+y+z)}CoₓMn_{y}M1_{z}O₂

wherein, in Chemical Formula 1, Ml is at least one selected from Na, K, Mg, Ba, B, Ce, Hf, Ta, Cr, F, Al, V, Ti, Fe, Zr, Zn, Si, Y, Nb, Ga, Sn, Mo, P, Sr, Ge, Nd, Gd, and Cu, and 0.95 ≤ w ≤ 1.15, 0 < x ≤ 0.20, 0 ≤ y ≤ 0.20, and 0 < z ≤ 0.20.

In Chemical Formula 1, "w", representing a ratio of lithium to all elements other than lithium in the lithium transition metal oxide, may be 0.95 or more and 1.15 or less, 0.95 or more and 1.10 or less, 0.98 or more and 1.10 or less, or 1.01 or more and 1.10 or less.

When "w" in Chemical Formula 1 is less than 0.95, capacity of the positive electrode active material comprising the lithium transition metal oxide represented by Chemical Formula 1 may be reduced. On the other hand, when "w" in Chemical Formula 1 is greater than 1.15, phase separation may occur due to lithium and manganese present in excess in the lithium transition metal oxide, and an impurity phase belonging to a space group other than R-3m space group may be generated.

In Chemical Formula 1, "1-(x+y+z)", representing a molar fraction of nickel relative to all metal elements other than lithium in the lithium transition metal oxide, may be 0.50 or more and 0.95 or less, 0.60 or more and 0.95 or less, 0.70 or more and 0.95 or less, 0.80 or more and 0.95 or less, or 0.90 or more and 0.95 or less. When the molar fraction of nickel in the lithium transition metal oxide satisfies the above range, a stable crystal structure can be formed, and a high energy density can be exhibited.

In Chemical Formula 1, "x", representing a molar fraction of cobalt relative to all metal elements other than lithium in the lithium transition metal oxide, may be 0.20 or less, 0.15 or less, or 0.10 or less. When the molar fraction of cobalt in the lithium transition metal oxide satisfies the above range, a stable crystal structure can be formed, and favorable output characteristics can be exhibited.

In Chemical Formula 1, "y", representing a molar fraction of manganese relative to all metal elements other than lithium in the lithium transition metal oxide, may be 0.20 or less, 0.15 or less, 0.10 or less, or 0.05 or less. When the lithium transition metal oxide contains manganese, "y" in Chemical Formula 1 is greater than 0. When the molar fraction of manganese in the lithium transition metal oxide satisfies the above range, a stable crystal structure can be formed.

In Chemical Formula 1, Ml refers to a dopant doped in the lithium transition metal oxide. The lithium transition metal oxide has a layered crystal structure in which a lithium layer containing lithium and a transition metal layer containing a transition metal are alternately arranged, and the dopant may be present in a doped state in a crystal lattice of the lithium transition metal oxide (in at least one of the lithium layer and the transition metal layer).

In Chemical Formula 1, "z", representing a molar fraction of a dopant relative to all metal elements other than lithium in the lithium transition metal oxide, may be 0.20 or less, 0.15 or less, 0.10 or less, 0.05 or less, 0.04 or less, 0.03 or less, 0.02 or less, or 0.01 or less.

When the lithium transition metal oxide selectively contains a dopant, the dopant may comprise at least one selected from Na, K, Mg, Ca, Sr, Ba, Rb, B, Ce, Hf, Ta, Cr, F, Al, V, Ti, Fe, Zr, Zn, Si, Y, Nb, Ga, Sn, Mo, W, P, Ge, Nd, Gd, and Cu; preferably at least one selected from Mg, Ca, Ba, B, Al, V, Ti, Fe, Zr, Zn, Si, Nb, Mo, W, and Cu; and more preferably at least one selected from B, Al, Ti, Zr, Nb, Mo, and W. The type, combination, and content of the dopant may be appropriately selected within a range that does not adversely affect electrochemical properties and stability of the positive electrode active material.

The lithium transition metal oxide is in a form of a secondary particle in which a plurality of unit particles are aggregated. The unit particle may be referred to as a primary particle.

The unit particle may have a circular shape, a rod shape, an elliptical shape, and/or an irregular shape. In addition, unless specifically intended in a manufacturing process, unit particles having various shapes may be present in the same positive electrode active material. Further, the unit particle refers to a particle unit in which a grain boundary is not visually present when observed at a magnification of 5,000 to 20,000 times using a scanning electron microscope.

As a size of the unit particle, an average value of a length in a major axis direction and a length in a minor axis direction of the unit particle ([major axis length + minor axis length] / 2) may be used. As an average size of the unit particle, an arithmetic average value of sizes of the unit particles present in the secondary particle may be used.

For example, the unit particle may have an average particle diameter of 0.1 µm to 1.0 µm. In this case, the secondary particle may be an aggregate in which more than 30, 50 or more, 100 or more, or several hundreds or more of the unit particles are aggregated.

In another example, the unit particle may have an average particle diameter of 2.0 µm to 10.0 µm, 2.0 µm to 8.0 µm, 2.0 µm to 6.0 µm, 2.0 µm to 5.0 µm, 2.0 µm to 4.0 µm, or 2.0 µm to 3.0 µm. In this case, the secondary particle may be an aggregate in which 30 or fewer unit particles are aggregated.

An average particle diameter (D₅₀) of the secondary particle may be 2.0 µm or more and 16.0 µm or less, 2.0 µm or more and 14.0 µm or less, 2.0 µm or more and 12.0 µm or less, 3.0 µm or more and 16.0 µm or less, 3.0 µm or more and 14.0 µm or less, 3.0 µm or more and 12.0 µm or less, 4.0 µm or more and 16.0 µm or less, 4.0 µm or more and 14.0 µm or less, or 4.0 µm or more and 12.0 µm or less. The average particle diameter (D₅₀) of the secondary particle may vary depending on the number and size of the unit particles constituting the secondary particle.

An average particle diameter of the lithium transition metal oxide (secondary particle) in the positive electrode active material may be measured using a laser diffraction method. For example, after dispersing the secondary particles in a dispersion medium, the secondary particles may be introduced into a commercially available laser diffraction particle size analyzer (for example, Microtrac MT 3000), ultrasonic waves of about 28 kHz may be irradiated at an output of 60 W, a volume cumulative particle size distribution graph may then be obtained, and a particle size corresponding to 50% of the cumulative volume may be used as an average particle diameter (D₅₀).

Unless otherwise defined, the term "surface portion of a particle" as used herein refers to a region relatively close to an "outermost surface" of the particle, and the term "central portion of a particle" refers to a region relatively closer to a "center" of the particle than the "surface portion."

Accordingly, the term "surface portion of a unit particle (primary particle)" refers to a region relatively close to an "outermost surface" of the unit particle (primary particle), and the term "central portion of a unit particle (primary particle)" refers to a region relatively closer to a "center" of the unit particle (primary particle) than the "surface portion."

Similarly, the term "surface portion of a secondary particle" refers to a region relatively close to an "outermost surface" of the secondary particle, and the term "central portion of a secondary particle" refers to a region relatively closer to a "center" of the secondary particle than the "surface portion."

In this case, a region other than the "surface portion of a particle" in any particle may be defined as a "central portion of the particle."

More specifically, in the present specification, when a half-radius of the lithium transition metal oxide measured from a cross-sectional SEM image of the lithium transition metal oxide is defined as R, a region where a distance (D) from a center of the lithium transition metal oxide satisfies (1/2)R < D may be defined as a surface portion, and a region where the distance (D) from the center of the lithium transition metal oxide satisfies 0 ≤ D ≤ (1/2)R may be defined as a central portion. Here, it is assumed that the lithium transition metal oxide is a secondary particle. An outermost edge of the surface portion corresponds to an outermost surface of the secondary particle. Accordingly, the surface portion corresponds to a region from a point where the distance (D) from the center of the secondary particle satisfies (1/2)R < D to the outermost surface of the secondary particle.

The secondary particle may have a shape that is not a perfect sphere, such as an elliptical shape. Alternatively, irregularities may be present on a surface of the secondary particle. In this case, a diameter of the secondary particle may be calculated from an average value of a major axis length and a minor axis length of the lithium transition metal oxide measured from a cross-sectional SEM image of the secondary particle. One half of the average value of the major axis length and the minor axis length of the lithium transition metal oxide measured from the cross-sectional SEM image of the secondary particle may be used as a half-radius (R) of the secondary particle.

The lithium transition metal oxide is in a form of a secondary particle in which a plurality of unit particles are aggregated, and a cobalt-enriched region in which cobalt distribution is concentrated is present in a surface portion of at least one of the unit particles. The cobalt-enriched region may be present in some or all of the unit particles constituting the secondary particle, and preferably, the cobalt-enriched region is present in all of the unit particles constituting the secondary particle.

The cobalt-enriched region is distinguished from a cobalt-containing coating layer formed on a surface of the unit particle and/or the secondary particle. The cobalt-containing coating layer covers an outermost surface of the unit particle, whereas the cobalt-enriched region is a region present inside the outermost surface of the unit particle. In addition, the cobalt-containing coating layer may be distinguished from the cobalt-enriched region in that the cobalt-containing coating layer contains cobalt-containing oxide. Herein, the term "cobalt-containing oxide" refers to cobalt oxides such as Co₃O₄ and lithium-cobalt oxides such as LiCoO₂ and LiCo₂O₄. Further, herein, the cobalt-containing oxide does not have a composition defined by Chemical Formula 1 and is a compound different from the lithium transition metal oxide defined herein. Accordingly, the cobalt-containing oxide has crystallographic characteristics different from those of the lithium transition metal oxide.

For example, a cobalt-containing coating layer formed on a surface of the unit particle has crystallographic characteristics different from those of the unit particle. Accordingly, in a cross-sectional TEM image of the unit particle, a physical boundary formed between particles or a boundary at which a crystal structure changes is present between the unit particle and the cobalt-containing coating layer.

In addition, the cobalt-containing coating layer formed on a surface of the unit particle exhibits crystallographic characteristics different from those of the unit particle. Since the cobalt-containing coating layer contains cobalt-containing oxides such as LiCoO₂ and LiCo₂O₄, when the cobalt-containing coating layer is formed on a surface of the unit particle, characteristic peaks specific to cobalt-containing oxides such as LiCoO₂ and LiCo₂O₄ may be observed from a diffraction spectrum obtained through X-ray diffraction (XRD) analysis using a Cu-Kα ray with respect to the positive electrode active material comprising the lithium transition metal oxide.

That is, the lithium transition metal oxide according to the present invention is characterized in that, instead of a cobalt-containing coating layer being formed on a surface of the unit particle, a cobalt-enriched region in which cobalt distribution is concentrated is formed at a predetermined thickness in a direction from an outermost surface of the unit particle toward a central portion of the unit particle. Accordingly, a metal oxide (for example, cobalt-containing oxides such as LiCoO₂ and LiCo₂O₄) having crystallographic characteristics different from those of the lithium transition metal oxide may be absent on a surface of the secondary particle. In addition, a metal oxide (for example, cobalt-containing oxides such as LiCoO₂ and LiCo₂O₄) having crystallographic characteristics different from those of the lithium transition metal oxide may be absent in a grain boundary formed by a gap between adjacent unit particles or contact of adjacent unit particles.

The cobalt-enriched region may be defined through TEM/EDS analysis of the positive electrode active material comprising the lithium transition metal oxide.

The TEM/EDS analysis method is a method of mapping cobalt (Co), which is a target element, through EDS mapping of a cross-sectional FE-TEM image of the lithium transition metal oxide and quantitatively analyzing a content of cobalt (Co), according to a known method.

A molar fraction of cobalt measured in the cobalt-enriched region through TEM/EDS analysis is greater than an average molar fraction of cobalt in the unit particle, and a molar fraction of cobalt measured in the cobalt-enriched region through TEM/EDS analysis may be 1.35 times or more and less than 10 times a molar fraction of cobalt measured at a center of the unit particle.

When the molar fraction of cobalt measured in the cobalt-enriched region is less than 1.35 times the molar fraction of cobalt measured at the center of the unit particle, it may be difficult to sufficiently prevent surface deterioration caused by cracks generated on a surface of the unit particle by improving resistance to volume change of the unit particle caused by repeated charging/discharging. When the molar fraction of cobalt measured in the cobalt-enriched region exceeds 10 times the molar fraction of cobalt measured at the center of the unit particle, rate characteristic and other properties of a lithium secondary battery using the lithium transition metal oxide as a positive electrode active material may be deteriorated due to degradation of surface kinetic properties of the unit particle.

Preferably, a molar fraction of cobalt measured in the cobalt-enriched region is greater than a molar fraction of cobalt measured in a grain boundary formed by contact of adjacent unit particles. When the molar fraction of cobalt measured in the cobalt-enriched region is less than the molar fraction of cobalt measured in the grain boundary formed by contact of adjacent unit particles, it is highly likely that a cobalt-containing coating layer containing cobalt-containing oxides such as LiCoO₂ and LiCo₂O₄ is present in the grain boundary formed by the contact of the unit particles.

According to the present invention, the cobalt-enriched region in the unit particle may be formed at a predetermined thickness by adjusting conditions of a second heat-treatment step and raw materials used in the second step during a manufacturing process of the positive electrode active material.

Preferably, a thickness of the cobalt-enriched region is 1 nm to 100 nm, 1 nm to 90 nm, 1 nm to 80 nm, 1 nm to 70 nm, or 1 nm to 60 nm. When the thickness of the cobalt-enriched region is less than 1 nm, it may be difficult to sufficiently prevent surface deterioration caused by cracks generated on a surface of the unit particle by improving resistance to volume change of the unit particle caused by repeated charging/discharging. When the thickness of the cobalt-enriched region is greater than 100 nm, rate characteristic and other properties of a lithium secondary battery using the lithium transition metal oxide as a positive electrode active material may be deteriorated due to degradation of surface kinetic properties of the unit particle.

In the unit particle in which the cobalt-enriched region is present, there is a concentration retention region inside the cobalt-enriched region in which a concentration of cobalt is maintained. The concentration retention region refers to a region in which the concentration of cobalt is maintained within a range of ±5 mol%.

The concentration retention region may be identified as a region in which a concentration of cobalt is maintained within a range of ±5 mol% through EDS mapping of cobalt (Co), which is a target element, on a cross-sectional FE-TEM image of the lithium transition metal oxide, and through line-scanning of cobalt (Co) mapped along a direction from an outermost surface of the unit particle toward a center of the unit particle.

A boundary between the cobalt-enriched region and the concentration retention region may correspond to a point, in a region close to the outermost surface of the unit particle, at which a content of cobalt present at a relatively high concentration converges to an average concentration of cobalt in the unit particle, according to a line-scanning result of cobalt (Co) based on TEM/EDS analysis. Similarly, a thickness of the cobalt-enriched region may be a distance from the outermost surface of the unit particle to a point at which the content of cobalt converges to the average concentration of cobalt in the unit particle.

For example, when a molar concentration of cobalt at an outermost surface of the unit particle is 30 mol% and an average concentration of cobalt in the unit particle is 5 mol%, according to a line-scanning result linearly representing a content of cobalt in the unit particle, the concentration of cobalt in the unit particle decreases from 30 mol% to 5 mol%, and a point at which the molar concentration of cobalt converges to 5 mol% becomes a boundary between the cobalt-enriched region and the concentration retention region, and a distance from the outermost surface of the unit particle to the point at which the molar concentration of cobalt converges to 5 mol% may be a thickness of the cobalt-enriched region.

A possibility of a content of a cobalt-containing impurity phase (LCO) on a surface of the lithium transition metal oxide or a possibility of presence of a cobalt-containing coating layer on the surface of the lithium transition metal oxide may be inferred through a ratio (I2/I1) of an average intensity (I2) of a peak present in a region of 2θ = 45.25 ± 0.25° to a maximum intensity (I1) of a peak present in a region of 2θ = 44.5 ± 0.5° in a diffraction spectrum obtained through X-ray diffraction (XRD) analysis using a Cu-Kα ray with respect to the positive electrode active material.

Preferably, the ratio (I2/I1) of the average intensity (I2) of the peak present in the region of 2θ = 45.25 ± 0.25° to the maximum intensity (I1) of the peak present in the region of 2θ = 44.5 ± 0.5° in the diffraction spectrum obtained through the XRD analysis using the Cu-Kα ray with respect to the positive electrode active material is greater than 0.001 and less than 0.015, greater than 0.001 and equal to or less than 0.013, greater than 0.001 and equal to or less than 0.011, greater than 0.001 and equal to or less than 0.010, greater than 0.001 and equal to or less than 0.0097, equal to or greater than 0.002 and equal to or less than 0.0097, equal to or greater than 0.003 and equal to or less than 0.0097, equal to or greater than 0.004 and equal to or less than 0.0097, equal to or greater than 0.005 and equal to or less than 0.0097, equal to or greater than 0.006 and equal to or less than 0.0097, equal to or greater than 0.007 and equal to or less than 0.0097, or equal to or greater than 0.0076 and equal to or less than 0.0097.

Since the intensity of a peak present in the region of 2θ = 45.25 + 0.25° may have a value greater than 0 due to a peak present in the region of 2θ = 44.5 + 0.5°, the peak intensity ratio (I2/I1) may be greater than 0.001.

In addition, a peak intensity ratio (I(003)/I(104)) of a maximum intensity (I(003)) of a peak corresponding to a (003) crystal plane to a maximum intensity (I(104)) of a peak corresponding to a (104) crystal plane, calculated from a diffraction spectrum obtained through the XRD analysis using the Cu-Kα ray with respect to the positive electrode active material, may be 1.5 to 2.0.

The peak intensity ratio (I(003)/I(104)) may be calculated as a ratio of the maximum intensity (I(003)) of the peak corresponding to the (003) crystal plane (in a region of 2θ = 18.6 ± 1.0°) to the maximum intensity (I(104)) of the peak corresponding to the (104) crystal plane (in a region of 2θ = 44.5 ± 1.0°) calculated from the diffraction spectrum.

In general, I(003)/I(104) calculated from the diffraction spectrum obtained through the XRD analysis using the Cu-Kα ray with respect to the positive electrode active material is an index that indirectly indicates a degree of regular separation between a lithium layer and a transition metal layer in a crystal structure of the lithium transition metal oxide to form a layered structure. For example, the larger I(003)/I(104) is, the less cation mixing (cation mixing of lithium and nickel) between the lithium layer and the transition metal layer may be.

As defined herein, the positive electrode active material having a cobalt-enriched region in which distribution of cobalt is concentrated in a surface portion of the unit particle may form a stable crystal structure by having I(003)/I(104), calculated from the diffraction spectrum obtained through the XRD analysis using the Cu-Kα ray with respect to the positive electrode active material, in a range of 1.5 to 2.0.

In addition, a difference between 2θ (110) at which a peak corresponding to a (110) crystal plane is observed and 2θ (108) at which a peak corresponding to a (108) crystal plane is observed, calculated from the diffraction spectrum obtained through the XRD analysis using the Cu-Kα ray with respect to the positive electrode active material, may be 0.3° to 0.5°.

The difference of 2θ (110) - 2θ (108) may be calculated as a difference between 2θ (110), at which the peak corresponding to the (110) crystal plane (in a region of 2θ = 64.6° to 64.8°) is observed, and 2θ (108), at which the peak corresponding to the (108) crystal plane (in a region of 2θ = 64.3° to 64.5°) is observed, calculated from the diffraction spectrum.

Similar to I(003)/I(104) described above, a degree of separation between the peak corresponding to the (110) crystal plane and the peak corresponding to the (108) crystal plane may be used as an index indicating regularity of a crystal structure of the positive electrode active material having a cobalt-enriched region in which distribution of cobalt is concentrated in a surface portion of the unit particle. If the regularity of the crystal structure of the positive electrode active material having the cobalt-enriched region in the surface portion of the unit particle is reduced, the peak corresponding to the (110) crystal plane and the peak corresponding to the (108) crystal plane may not be sufficiently separated and may overlap to appear as a single peak. As defined herein, the positive electrode active material having the cobalt-enriched region in the surface portion of the unit particle may form a stable crystal structure by having the difference of 2θ (110) - 2θ (108), calculated from the diffraction spectrum obtained through the XRD analysis using the Cu-Kα ray with respect to the positive electrode active material, in a range of 0.3° to 0.5°.

### Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the positive electrode active material is the same as described above, for convenience, a detailed explanation will be omitted, and only the components that have not been described will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 µm to 500 µm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material may be included in an amount of 80 wt% to 99 wt%, specifically 85 wt% to 98.5 wt%, with respect to the total weight of the positive electrode active material layer. When the positive electrode active material is included in this content range, excellent capacity characteristics may be exhibited, but the present invention is not necessarily limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte. Since the positive electrode is the same as described above, detailed description of the positive electrode will be omitted for convenience, and other components which have not been described above will be described in detail below.

The lithium secondary battery may further optionally include a battery case accommodating an electrode assembly of the positive electrode, the negative electrode and the separator, and a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 µm to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode active material layer.

The binder is a component that assists in the bonding between a conductive material, an active material, and a current collector, and may typically be added in an amount of 0.1 wt% to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker consisting of zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used as a separator in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of high melting point glass fiber or polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C₂ to C₂₀ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include Li₂S-P₂S₅, Li₂S-P₂S-LiX (where X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₙSₙ (where m and n are integers, and Z is Ge, Zn, or Ga), Li₂S-GeS₂, Li₂S-SiS₂-Li₃PO₄, and Li₂S-SiS₂-LiₚMO_{q} (where p and q are integers, and M is P, Si, Ge, B, Al, Ga, or In).

The solid electrolyte, preferably, the sulfide-based solid electrolyte, may be amorphous, crystalline, or in a state in which an amorphous phase and crystalline phase are mixed.

Materials for the oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present invention, there is provided a battery module including the lithium secondary battery as a unit cell and/or a battery pack including the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the present invention will be described in more detail through examples. However, these examples are only for the purpose of illustrating the present invention and should not be construed as limiting the scope of the present invention.

### Preparation Example 1. Preparation of positive electrode active material

### Example 1

(a) A spherical Ni_{0.90}Co_{0.05}Mn_{0.05}(OH)₂ hydroxide precursor was synthesized by a coprecipitation method. Specifically, 50 wt% NaOH and 18 wt% NH4OH were added to a 1.5 M aqueous solution of mixed transition metal sulfates, in which nickel sulfate, cobalt sulfate, and manganese sulfate were mixed at a molar ratio of 90:5:5, in a 90 L-scale reactor. The pH in the reactor was maintained at 12.0, and the temperature of the reactor was maintained at 45°C, while an inert gas, N2, was introduced into the reactor to prevent oxidation of the prepared precursor. After completion of the reaction, the precursor was separated, washed with deionized water, and dried at 120°C for 10 hours to obtain a Ni_{0.90}Co_{0.05}Mn_{0.05}(OH)₂ hydroxide precursor.
(b) The hydroxide precursor obtained in step (a) was subjected to a first heat treatment at 720°C for 8 hours in an O₂ atmosphere, together with LiOH (Li/(Ni+Co+Mn) molar ratio = 1.065; wherein (Ni+Co+Mn) is a value calculated based on the composition of the hydroxide precursor obtained in step (a)), to obtain an intermediate product.
(c) The intermediate product obtained in step (b) was mixed with Co(OH)₂ (weighed so that a molar fraction of Co relative to all metal elements other than lithium in the intermediate product is 0.02 (2.0 mol%)), ZrO₂ (weighed so that a molar fraction of Zr relative to all metal elements other than lithium in the intermediate product is 0.0005 (0.05 mol%)), and TiO₂ (weighed so that a molar fraction of Ti relative to all elements in the hydroxide precursor is 0.001 (0.1 mol%)), and was subjected to a second heat treatment at 680°C for 5 hours in an O₂ atmosphere to obtain a final product (lithium transition metal oxide).

### Example 2

A positive electrode active material was prepared in the same manner as in Example 1, except that the second heat-treatment temperature of step (c) was set to 740°C.

### Example 3

A positive electrode active material was prepared in the same manner as in Example 1, except that the intermediate product obtained in step (b) was mixed with Co(OH)₂ (weighed so that a molar fraction of Co relative to all metal elements other than lithium in the intermediate product was 0.01 (1.0 mol%)), ZrO₂ (weighed so that a molar fraction of Zr relative to all metal elements other than lithium in the intermediate product was 0.0005 (0.05 mol%)), and TiO₂ (weighed so that a molar fraction of Ti relative to all elements in the hydroxide precursor was 0.001 (0.1 mol%)), and subjected to a second heat treatment at 680°C for 5 hours in an O₂ atmosphere.

### Comparative Example 1

A positive electrode active material was prepared in the same manner as in Example 1, except that the second heat-treatment temperature of step (c) was set to 500°C.

### Comparative Example 2

A positive electrode active material was prepared in the same manner as in Example 1, except that the second heat-treatment temperature of step (c) was set to 650°C.

### Comparative Example 3

A positive electrode active material was prepared in the same manner as in Example 1, except that the second heat-treatment temperature of step (c) was set to 800°C.

### Comparative Example 4

A positive electrode active material was prepared in the same manner as in Example 1, except that a second heat-treatment temperature of step (c) was set to 900°C.

### Comparative Example 5

A positive electrode active material was prepared in the same manner as in Example 1, except that the intermediate product obtained in step (b) was not mixed with Co(OH)₂, ZrO₂, and TiO₂, and was subjected to a second heat treatment at 680°C for 5 hours in an O₂ atmosphere.

### Comparative Example 6

A positive electrode active material was prepared in the same manner as in Example 1, except that the intermediate product obtained in step (b) was mixed with Co(OH)₂ (weighed so that a molar fraction of Co relative to all metal elements other than lithium in the intermediate product was 0.04 (4.0 mol%)), ZrO₂ (weighed so that a molar fraction of Zr relative to all metal elements other than lithium in the intermediate product was 0.0005 (0.05 mol%)), and TiO₂ (weighed so that a molar fraction of Ti relative to all elements in the hydroxide precursor was 0.001 (0.1 mol%)), and subjected to a second heat treatment at 680°C for 5 hours in an O₂ atmosphere.

### Preparation Example 2. Manufacture of lithium secondary battery (half-cell)

A positive electrode slurry was prepared by dispersing 94 wt% of each positive electrode active material prepared according to Preparation Example 1, 3 wt% of carbon black, and 3 wt% of PVDF binder in 30 g of N-methyl-2-pyrrolidone (NMP). The positive electrode slurry was uniformly applied onto a 15 µm-thick aluminum thin film and vacuum dried at 135 °C to manufacture a positive electrode for a lithium secondary battery.

A half-cell was manufactured using a lithium foil as a counter electrode to the positive electrode, a porous polyethylene membrane (Celgard 2300, thickness: 25 µm) as a separator, and an electrolyte in which LiPF₆ was dissolved at a concentration of 1.15 M in a mixed solvent of ethylene carbonate and ethyl methyl carbonate at a volume ratio of 3:7.

### Experimental Example 1. TEM/EDS Analysis of Positive Electrode Active Material

Whether a cobalt-enriched region in which distribution of cobalt is concentrated was present in a unit particle constituting the lithium transition metal oxide included in each positive electrode active material prepared according to Preparation Example 1 was analyzed through energy dispersive X-ray spectroscopy (EDS) mapping of a cross-sectional TEM image of the lithium transition metal oxide.

The TEM/EDS analysis was performed by the following method. First, the lithium transition metal oxide included in each positive electrode active material prepared according to Preparation Example 1 was selected, and the lithium transition metal oxide was subjected to cross-section processing using a FIB (Ga-ion source), and then a cross-sectional image was captured using a transmission electron microscope (TEM). Subsequently, cobalt (Co), which was a target element, was mapped through EDS mapping of the cross-sectional TEM image, and a degree of concentration of cobalt distribution, a thickness of the cobalt-enriched region, an average content c1 (mol%) of cobalt in the cobalt-enriched region, and an average content c2 (mol%) of cobalt measured at a center (geometric center) of the unit particle were measured, respectively.

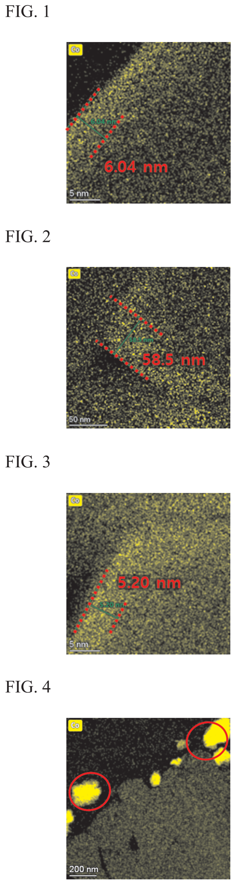

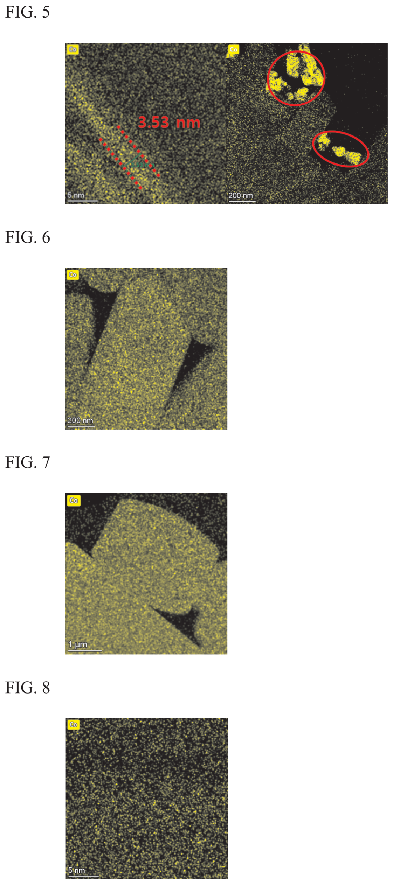

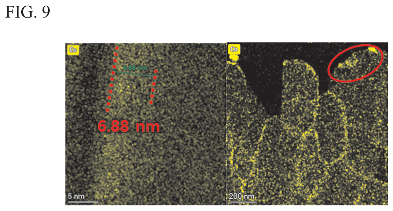

The results of the TEM/EDS analysis are shown in FIGS. 1 to 9. The analysis results are shown in Table 1 below.

**[Table 1]**

| Classification | Present of Co-enriched region | Thickness of Co-enriched region (nm) | c1 (mol%) | c2 (mol%) | c1/c2 |
|---|---|---|---|---|---|
| Example 1 | O | 6.04 | 23.76 | 5.01 | 4.74 |
| Example 2 | O | 58.5 | 6.81 | 5.02 | 1.36 |
| Example 3 | O | 5.2 | 12.50 | 5.01 | 2.50 |
| Comparative Example 1 | X | X | 5.02 | 4.98 | 1.01 |
| Comparative Example 2 | O | 3.53 | 25.14 | 5.02 | 5.01 |
| Comparative Example 3 | X | X | 6.98 | 6.97 | 1.00 |
| Comparative Example 4 | X | X | 6.97 | 7.01 | 0.99 |
| Comparative Example 5 | X | X | 5 | 5.03 | 0.99 |
| Comparative Example 6 | O | 6.88 | 33.60 | 4.97 | 6.76 |

Referring to FIGS. 4, 5, and 9, which are TEM/EDS images of the lithium transition metal oxides according to Comparative Examples 1, 2, and 6, it was confirmed that cobalt-containing oxides were present on surfaces of the lithium transition metal oxides of Comparative Examples 1, 2, and 6 in the form of fine particles.

In Comparative Example 1, it is presumed that cobalt mixed in step (c) did not penetrate into the unit particle, and most of the cobalt formed a cobalt-containing coating layer including cobalt-containing oxides on a surface of the unit particle. In Comparative Example 2, some of the cobalt mixed in step (c) penetrated into the unit particle to form a cobalt-enriched region; however, it was confirmed that a large amount of cobalt formed a cobalt-containing coating layer including cobalt-containing oxides on a surface of the unit particle.

In Comparative Examples 3 and 4, since cobalt mixed in step (c) was uniformly diffused into the unit particle, it was confirmed that a cobalt-enriched region in which distribution of cobalt is concentrated in a surface portion of the unit particle was not formed. In Comparative Example 6, since the amount of cobalt mixed in step (c) was excessively large, some of the cobalt penetrated into the unit particle to form a cobalt-enriched region; however, it was confirmed that a large amount of cobalt formed a cobalt-containing coating layer including cobalt-containing oxides on a surface of the unit particle.

### Experimental Example 2. XRD Analysis of Positive Electrode Active Material

X-ray diffraction (XRD) analysis was performed on each positive electrode active material prepared according to Preparation Example 1 to analyze crystallographic characteristics of the lithium transition metal oxide included in the positive electrode active material.

Specifically, the XRD analysis was performed using a Bruker D8E Endeavor diffractometer with Cu-Kα radiation (1.540598 Å). From a diffraction spectrum obtained through the XRD analysis using the Cu-Kα ray with respect to the positive electrode active material, a full width at half maximum (FWHM) of a peak corresponding to a (104) crystal plane (in a region of 2θ = 44.5 ± 1.0°) of an R-3m layered crystal structure was calculated.

In addition, a peak intensity ratio (I(003)/I(104)) of a maximum intensity (I(003)) of a peak corresponding to a (003) crystal plane (in a region of 2θ = 18.6 ± 1.0°) to a maximum intensity (I(104)) of a peak corresponding to a (104) crystal plane, calculated from the diffraction spectrum, and a difference between 2θ (110), at which a peak corresponding to a (110) crystal plane (in a region of 2θ = 64.6° to 64.8°) was observed, and 2θ (108), at which a peak corresponding to a (108) crystal plane (in a region of 2θ = 64.3° to 64.5°) was observed, were calculated.

In the diffraction spectrum obtained through the XRD analysis using the Cu-Kα ray with respect to the positive electrode active material, a peak present in a region of 2θ = 44.5 ± 0.5° is a peak specific to the (104) crystal plane of the lithium transition metal oxide having an R-3m layered crystal structure, and shows the highest intensity among peaks in a region of 2θ = 44.5 ± 1.0°. When cobalt-containing oxides such as LiCoO₂ and LiCo₂O₄ are present as impurities, peak splitting in a region of 2θ = 44.5 ± 1.0° may occur in the diffraction spectrum, and a peak may be observed in a region of 2θ = 45.25 ± 0.25°.

In the region of 2θ = 45.25 ± 0.25°, a peak specific to the (104) crystal plane of LiCoO₂ and a peak specific to the (400) crystal plane of LiCo₂O₄ may be observed. Since the peaks specific to the (104) crystal plane of LiCoO₂ and the (400) crystal plane of LiCo₂O₄ may overlap and may not be completely separated, when calculating a peak intensity ratio (I2/I1) described below, I2 is preferably considered as an average intensity of a peak present in the region of 2θ = 45.25 ± 0.25°.

As intensity of a peak present in the region of 2θ = 45.25 ± 0.25° becomes stronger, this indicates that a content of a Co-containing impurity phase (LCO) on a surface of the lithium transition metal oxide is higher, and a possibility that a cobalt-containing coating layer is present on the surface of the lithium transition metal oxide is higher.

When a peak in the region of 2θ = 45.25 ± 0.25° is observed in the diffraction spectrum, it is indicated that an LCO peak is present. To indirectly represent a content of the Co-containing impurity phase (LCO) on the surface of the lithium transition metal oxide or a possibility that a cobalt-containing coating layer is present on the surface of the lithium transition metal oxide, a ratio (I2/I1) of an average intensity (I2) of a peak present in the region of 2θ = 45.25 ± 0.25° to a maximum intensity (I1) of a peak present in the region of 2θ = 44.5 ± 0.5° in the diffraction spectrum was calculated.

An average crystallite size of the lithium transition metal oxide was calculated from a straight line obtained by plotting θ (rad) and β (rad), which are a diffraction angle and a full width at half maximum, respectively, from 2θ = 10° to 120°, on a coordinate plane having sinθ on the horizontal axis and βcosθ on the vertical axis, through Rietveld refinement of the diffraction spectrum obtained through the XRD analysis using the Cu-Kα ray with respect to the positive electrode active material.

In addition, lattice strain ε represented as Δd/d was calculated as 1/4 of a slope of a straight line obtained by plotting θ (rad) and β (rad) from 2θ = 10° to 120° on a coordinate plane having sinθ on the horizontal axis and βcosθ on the vertical axis, through Rietveld refinement of the diffraction spectrum (or may be expressed as β/4tanθ).

The analysis results are shown in Table 2 below.

**[Table 2]**

| Classificati on | FWHM(10 4) | Presence of LCO Peak | Intensity ratio of 12/11 | I(003)/ I(104) | 2θ (110) -2θ (108) (°) | Cryatallite Size (nm) | Lattice Strain (ε) |
|---|---|---|---|---|---|---|---|
| Example 1 | 0.1568° | X | 0.0097 | 1.80 | 0.44 | 105 | 0.00057 |
| Example 2 | 0.1457° | X | 0.0076 | 1.81 | 0.44 | 123 | 0.00051 |
| Example 3 | 0.1555° | X | 0.0084 | 1.75 | 0.44 | 98 | 0.00054 |
| Comparativ e Example 1 | 0.1604° | O | 0.0166 | 1.76 | 0.44 | 87 | 0.00051 |
| Comparativ e Example 2 | 0.1591° | O | 0.0151 | 1.82 | 0.45 | 101 | 0.00055 |
| Comparativ e Example 3 | 0.1089° | X | 0.0073 | 1.78 | 0.41 | 189 | 0.00036 |
| Comparativ e Example 4 | 0.0887° | X | 0.0068 | 1.56 | 0.32 | 220 | 0.00028 |
| Comparativ e Example 5 | 0.1477° | X | 0.0085 | 1.76 | 0.44 | 105 | 0.00048 |
| Comparativ e Example 6 | 0.1669° | O | 0.0154 | 1.91 | 0.46 | 89 | 0.00062 |

Referring to Table 2, when a Co-containing impurity (LCO) is present in the lithium transition metal oxide, it was confirmed that peak splitting in a region of 2θ = 44.5 ± 1.0° (more specifically, a peak in a region of 2θ = 45.25 ± 0.25°) is observed in the diffraction spectrum. In addition, when peak splitting in a region of 2θ = 44.5 ± 1.0° is observed in the diffraction spectrum, it was confirmed that a full width at half maximum (FWHM) of a peak corresponding to a (104) crystal plane in the diffraction spectrum becomes greater than 0.158°.

Further, as confirmed through TEM/EDS analysis, intensity ratios I2/I1 measured from the positive electrode active materials according to Comparative Examples 1, 2, and 6, in which cobalt-containing oxide (LCO) is present as an impurity on a surface of the lithium transition metal oxide (unit particle), were found to exceed 0.015. That is, regardless of whether a cobalt-enriched region is formed in the unit particle, when cobalt-containing oxide is present as an impurity on a surface of the unit particle and/or the lithium transition metal oxide, the intensity ratio I2/I1 measured from the positive electrode active material may exceed 0.015.

Meanwhile, in general, lattice strain, which is one of the indicators representing regularity of crystallites such as a size of crystallites constituting the lithium transition metal oxide or a distance between adjacent crystallites, tends to increase as a cobalt-enriched region is formed in the unit particle. Referring to results of Comparative Examples 3 and 4, as confirmed through TEM/EDS analysis, it was found that lattice strain has a value of less than 0.00040 because no cobalt-enriched region was formed in the unit particle and cobalt was uniformly diffused. Referring to results of Comparative Example 6, it was found that lattice strain has a value exceeding 0.00060 as a content of cobalt in the unit particle becomes excessively high.

### Experimental Example 3. Evaluation of Electrochemical Properties of Lithium Secondary Battery (Half-Cell)

For the lithium secondary battery (half-cell) manufactured in Preparation Example 2, charge/discharge experiments were conducted using an electrochemical analyzer (Toyo, Toscat-3100) at 25 °C, in a voltage range of 3.0 V to 4.3 V, and under a discharge rate condition of 2.0 C/0.1 C to measure an initial charge capacity, an initial discharge capacity, an initial efficiency, and a 2.0C/0.1C rate capability (C-rate, discharge capacity ratio).

In addition, for the same lithium secondary battery (half-cell), a capacity retention, which is a ratio of a discharge capacity at a 50th cycle to an initial capacity, was measured after performing 50 charge/discharge cycles under conditions of room temperature (25°C) and high temperature (45°C), in a voltage range of 3.0 V to 4.3 V, and at 1C/1C using the electrochemical analyzer (Toyo, Toscat-3100).

The measurement results are shown in Table 3 below.

**[Table 3]**

| Classification | Charge capacity (mAh/g) | Discharge capacity (mAh/g) | Initial efficiency (%) | 2.0C/0.1C Rate (%) | Capacity retention at room temperature (%) | Capacity retention at high temperature (%) |
|---|---|---|---|---|---|---|
| Example 1 | 232.77 | 211.80 | 90.99 | 82.44 | 85.69 | 72.25 |
| Example 2 | 231.18 | 212.22 | 91.80 | 85.82 | 87.65 | 74.03 |
| Example 3 | 233.08 | 210.91 | 90.49 | 81.96 | 83.89 | 70.63 |
| Comparative Example 1 | 234.12 | 208.00 | 88.84 | 73.19 | 82.45 | 53.51 |
| Comparative Example 2 | 233.47 | 209.20 | 89.61 | 75.50 | 83.23 | 55.95 |
| Comparative Example 3 | 230.25 | 205.32 | 89.17 | 60.65 | 66.75 | 63.58 |
| Comparative Example 4 | 216.53 | 171.23 | 79.08 | 60.45 | 63.90 | 58.23 |
| Comparative Example 5 | 235.53 | 207.79 | 88.22 | 70.04 | 60.54 | 52.44 |
| Comparative Example 6 | 228.32 | 203.90 | 89.31 | 77.11 | 81.25 | 68.16 |

By comparing results of Examples 1 to 3 with those of Comparative Examples 1 and 5, it was confirmed that when a cobalt-enriched region, in which distribution of cobalt is concentrated in a surface portion of a unit particle, was formed, both rate characteristics and capacity retention at room temperature and high temperature were improved without deterioration in capacity characteristics or initial efficiency.

By comparing results of Examples 1 to 3 with those of Comparative Examples 3 and 4, it was confirmed that when a cobalt-enriched region, in which distribution of cobalt is concentrated in a surface portion of a unit particle, was formed instead of uniformly diffusing cobalt into an interior of the unit particle, discharge capacity, rate characteristics, and capacity retention at room temperature and high temperature were all improved.

In addition, by comparing results of Examples 1 to 3 with those of Comparative Examples 2 and 6, it was confirmed that although a part of cobalt mixed in step (c) penetrated into the unit particle to form a cobalt-enriched region, when a large amount of cobalt formed a cobalt-containing coating layer including cobalt-containing oxides on a surface of the unit particle, improvement in rate characteristics and capacity retention was insufficient.

As described above, according to the present invention, by forming a cobalt-enriched region in which cobalt distribution is concentrated in a surface portion of a unit particle constituting a lithium transition metal oxide instead of coating a surface of the unit particle, conductivity variation between unit particles caused by formation of a non-uniform coating layer can be reduced, and electrochemical properties including capacity characteristic and rate characteristic can be improved.

In addition, according to the present invention, by forming the cobalt-enriched region, in which cobalt distribution is concentrated, in the surface portion of the unit particle constituting the lithium transition metal oxide at a predetermined thickness, resistance to volume change of the unit particle caused by repeated charging/discharging can be improved, surface deterioration caused by cracks generated on the surface of the unit particle can be prevented, and thus improvement of lifespan characteristics of a lithium secondary battery using the lithium transition metal oxide as a positive electrode active material can be expected.

Although embodiments of the present invention have been described above, those skilled in the art can make various modifications and changes to the present invention by adding, changing, or deleting components without departing from the spirit of the present invention as set forth in the claims, which will be included within the scope of rights of the present invention.

## Claims

1. A positive electrode active material comprising a lithium transition metal oxide containing lithium, nickel, and cobalt,
wherein the lithium transition metal oxide is in a form of a secondary particle in which a plurality of unit particles are aggregated,
wherein a cobalt-enriched region in which the distribution of cobalt is concentrated is present in a surface portion of at least one of the unit particles,
wherein a thickness of the cobalt-enriched region is 1 nm to 100 nm, and,
in a diffraction spectrum obtained through X-ray diffraction (XRD) analysis using a Cu-Kα ray with respect to the positive electrode active material, a ratio (I2/I1) of an average intensity (I2) of a peak present in a region of 2θ = 45.25 + 0.25° to a maximum intensity (I1) of a peak present in a region of 2θ = 44.5 ± 0.5° is greater than 0.001 and less than 0.015.

2. The positive electrode active material of claim 1, wherein an average molar fraction of cobalt measured in the cobalt-enriched region is greater than an average molar fraction of cobalt in the unit particle.

3. The positive electrode active material of claims 1 or 2, wherein an average molar fraction of cobalt measured in the cobalt-enriched region is 1.35 times or more and less than 10 times a molar fraction of cobalt measured at a center of the unit particle.

4. The positive electrode active material of any one of claims 1 to 3, wherein the lithium transition metal oxide is represented by Chemical Formula 1 below:
[Chemical Formula 1] Li_{w}Ni_{1-(x+y+z)}CoₓMn_{y}M1_{z}O₂
wherein, in Chemical Formula 1, M1 is at least one selected from Na, K, Mg, Ba, B, Ce, Hf, Ta, Cr, F, Al, V, Ti, Fe, Zr, Zn, Si, Y, Nb, Ga, Sn, Mo, P, Sr, Ge, Nd, Gd, and Cu, and 0.95 ≤ w ≤ 1.15, 0 < x ≤ 0.20, 0 ≤ y ≤ 0.20, and 0 < z ≤ 0.20.

5. The positive electrode active material of any one of claims 1 to 4, wherein an average particle diameter of the unit particle is 0.1 µm to 1.0 µm.

6. The positive electrode active material of any one of claims 1 to 5, wherein an average particle diameter of the secondary particle is 2.0 µm to 16.0 µm.

7. The positive electrode active material of any one of claims 1 to 6, wherein cobalt-containing oxide is absent on a surface of the secondary particle.

8. The positive electrode active material of any one of claims 1 to 7, wherein cobalt-containing oxide is absent in a grain boundary formed by a gap between adjacent unit particles or contact of adjacent unit particles.

9. The positive electrode active material of any one of claims 1 to 8, wherein an average molar fraction of cobalt measured in the cobalt-enriched region is greater than a molar fraction of cobalt measured in a grain boundary formed by contact of adjacent unit particles.

10. The positive electrode active material of any one of claims 1 to 9, wherein a peak intensity ratio (I(003)/I(104)) of a maximum intensity (I(003)) of a peak corresponding to a (003) crystal plane to a maximum intensity (I(104)) of a peak corresponding to a (104) crystal plane, calculated from a diffraction spectrum obtained through X-ray diffraction (XRD) analysis using a Cu-Kα ray with respect to the positive electrode active material, is 1.5 to 2.0.

11. The positive electrode active material of any one of claims 1 to 10, wherein a difference between 2θ (110) at which a peak corresponding to a (110) crystal plane is observed and 2θ (108) at which a peak corresponding to a (108) crystal plane is observed, calculated from a diffraction spectrum obtained through X-ray diffraction (XRD) analysis using a Cu-Kα ray with respect to the positive electrode active material, is 0.3° to 0.5°.

12. A positive electrode comprising the positive electrode active material of any one of claims 1 to 11.

13. A lithium secondary battery using the positive electrode of claim 12.
